# EUROPÄISCHE PATENTSCHRIFT

(11) **EP 1 838 050 B1**
(45) Veröffentlichungstag und Bekanntmachung des Hinweises auf die Patenterteilung: **10.03.2010**
(21) Anmeldenummer: 06005967.2
(22) Anmeldetag: 23.03.2006
(51) Int. Cl.: G08G 1/09, H04L 12/56

(54) **Verfahren zur Übermittlung wenigstens eines Informationsdatensatzes zwischen einer mobilen Auslösevorrichtung und wenigstens einer ortsfesten Station**
Method for transmitting at least one information data set between a mobile actuator and at least one fixed station
Procédé de transmission d'au moins un jeu de données d'information entre un dispositif de déclenchement et au moins un poste fixe

(43) Veröffentlichungstag der Anmeldung: 26.09.2007
(73) Patentinhaber: Peiker acustic GmbH & Co. KG, 61381 Friedrichsdorf/Ts (DE)
(72) Erfinder: Bürg, Ulrich, 63071 Offenbach (DE); Richter, Lutz P., 15299 Mixdorf (DE)
(74) Vertreter: Rüfenacht, Philipp Michael

(56) Entgegenhaltungen:
- DE-A1- 3 121 790
- DE-A1- 10 226 084
- US-A- 6 150 961
- US-A1- 2002 030 611
- US-A1- 2003 187 570

## Beschreibung

### Technisches Gebiet

Die Erfindung betrifft ein Verfahren, eine Anordnung sowie ein Vorrichtung der Anordnung zur Übermittlung wenigstens eines Informationsdatensatzes zwischen einer mobilen Auslösevorrichtung und wenigstens einer ortsfesten Station.

### Stand der Technik

In der europäischen. Patentanmeldung EP 0 029 201 ist ein Verfahren beschrieben, bei dem Fahrzeuge als mobile Auslösevorrichtung jeweils Fahrtziele als Informationsdatensatz zu einer ortsfesten Station, einer so genannten Leitbake übertragen. Die übertragenen Daten werden ausgewertet und daraus eine allgemeine Verkehrslage ermittelt. Nachteilig im Übermittlungsverfahren der EP 0 029 201 ist, dass hohe Sendeleistungen bei der ortsfesten Station und bei der mobilen Auslösevorrichtung verwendet werden müssen und somit ein Datenaustausch nur in der Nähe der ortsfesten Stationen möglich ist.

Das Dokument US 2002/0030611 beschreibt ein Verfahren zur Übertragung von Datenpaketen zwischen Kraftfahrzeugen sowie Ortsfesten Sende-/Empfangseinheiten unter Verwendung eines Ad-hoc Netzes.

### Darstellung der Erfindung

### Aufgabe

Aufgabe der Erfindung ist es, die Nachteile der EP 0 029 201 zu überwinden und ein Verfahren aufzuzeigen, mit dem eine Datenübermittlung eines Informationsdatensatzes mit kleiner Sende- und Empfangsleistung möglichst schnell zu einer entfernten, ortsfesten Station erfolgen kann.

### Lösung der Aufgabe

Die Aufgabe wird dadurch gelöst, dass zur Übermittlung wenigstens eines Informationsdatensatzes zwischen einer mobilen Auslösevorrichtung und wenigstens einer ortsfesten Station eine Übermittlung über ein Ad-hoc-Netz vorgenommen wird. Eine Entfernung der mobilen Auslösevorrichtung zur ortsfesten Station kann hier grösser sein als deren Sende- und Empfangsreichweite, da die Übermittlung mit wenigstens einer oder mehreren sich dazwischen befindenden mobilen Übertragungsvorrichtungen erfolgen kann, welche bis auf eine Toleranz in Bezug auf die mobile Auslösevorrichtung gleiche Sende- / Empfangsreichweite hat bzw. haben, wobei dann der Informationsdatensatz direkt oder über die wenigstens eine mobile Übertragungsvorrichtung oder über weitere mobile Übertragungsvorrichtungen an die Station, insbesondere an eine nächst kommende ortsfeste Station, übertragen wird.
Unter einer mobilen Vorrichtung wird alles verstanden, was sich bewegen kann. Eine mobile Vorrichtung ist somit in erster Linie ein Strassenfahrzeug, Sie kann aber auch ein Gespann, ein Fahrrad, ein Schiff, ein Wanderer usw. sein. Unter einer mobilen Auslösevorrichtung wird eine mobile Vorrichtung verstanden, welche aus irgendwelchen Gründen einen Informationsdatensatz abzusenden hat. Ein derartiger Grund kann ein Unfall, insbesondere ein Verkehrsunfall, ein Notfall, eine Panne, eine Ölspur auf einer Fahrbahn, Glatteis, Wasser auf einer Fahrbahn usw. sein. Es kann sich bei einer mobilen Auslösevorrichtung einfach um eine mobile Vorrichtung handeln, welche etwas registriert hat, was für andere, insbesondere nachfolgende mobile Vorrichtungen von Interesse sein kann. Eine mobile Auslösevorrichtung kann auch eine mobile Vorrichtung sein, welche für andere mobile Vorrichtungen eine potentielle Gefahr darstellt, wie beispielsweise ein sich langsam bewegendes Fuhrwerk oder ein liegen gebliebenes Fahrzeugen.

Unter einem Informationsdatensatz wird alles verstanden, was die mobile Auslösevorrichtung aussendet, welches einerseits mobile Vorrichtungen in ihrer näheren Umgebung warnen soll und/oder an eine ortsfeste Station weiter gegeben werden soll. In der ortsfesten Station wird dann der Informationsdatensatz unter Einleitung notwendiger Massnahmen aufgearbeitet. Eine notwendige Massnahme kann eine Strassensperrung, Entsendung von Sanitäts-, Einsatz- und/oder polizeilichen Fahrzeugen, eine allgemeine Warnmeldung usw. sein.

In einer bevorzugten Ausführungsvariante, bei der insbesondere eine Verwendung einer geringen Sende- und Empfangsleistung ausgenützt wird, sind bei mobilen Auslöse- und Übertragungsvorrichtungen Sende- und Empfangseinheiten gleich bzw. analog ausgebildet und haben bis auf eine Toleranz in Bezug auf die mobile Auslösevorrichtung gleiche Sende- / Empfangsreichweite. Von der mobilen Auslösevorrichtung wird der Informationsdatensatz direkt oder über wenigstens eine weitere mobile Übertragungsvorrichtung an die nächst kommende ortsfeste Station übertragen. Die unterschiedlichen Ausdrücke - Auslösevorrichtung und Übertragungsvorrichtung - wurden lediglich gewählt, um deren unterschiedliche Funktionen aufzeigen zu können.

In einem Ad-hoc-Netz ist keine der Sendestationen besonders ausgezeichnet. Es ist auch keine Basisstation vorhanden; alle Stationen bis auf die ortsfeste Station sind gleichwertig. Ein Datenaustausch zwischen jeweils zwei Partner ist ohne weiteres möglich; für einen Aufbau eines "Sendepfades" über mehrere Stationen müssen jedoch wie unten angeführt, Vorkehrungen getroffen werden. Ein typisches Ad-hoc-Netz ist WirelessLAN (Local Area Network) nach IEEE 802.11 Standard, welches auch als "Funk-LAN" bezeichnet wird. Die Funkfrequenzen liegen im Mikrowellengebiet im Bereich von typischerweise 2,4 GHz. Im Gegensatz zu GSM, welches eine Sendeleistung von 1 bis 10 Watt hat, liegt die Sendeleistung bei WirelessLAN bei 0,1 Watt. Die Sendereichweite beträgt somit nur einige 100 m. D.h. typischerweise bei 30 m bis 100 m auf freier Fläche und 80 m in geschlossenen Räumen. Mit einer bevorzugten Ausgestaltung der Sendeantenne lassen sich bei Sichtkontakt 100 m bis 300 m erreichen. Weitere Informationen sind beispielsweise der Informationsschrift "Sicherheit im Funk-LAN" Bundesamt für Sicherheit in der Informationstechnik 2003 zu entnehmen.

Unter einer ortsfesten Station wird eine Station oder ein Ort verstanden, der Daten einer mobilen Auslösevorrichtung zur Weiterverarbeitung aufnehmen kann. Als ortsfeste Stationen können entsprechend ausgerüstete Notrufsäulen am Strassen- bzw. Autobahnrand und insbesondere so genannte Hotspots dienen.

Der Informationsdatensatz kann nun ausgehend von einer mobilen Auslösevorrichtung über eine mobile Übertragungsvorrichtung zu anderen mobilen Übertragungsvorrichtungen, vorzugsweise mit unten angeführten Auswahlkriterien, weitergereicht werden bis eine der mobilen Übertragungsvorrichtungen sich im Empfangsbereich einer ortsfesten Station befindet. Ist beispielsweise keine mobile Übertragungsvorrichtung und auch keine ortsfeste Station im Empfangsbereich der den Informationsdatensatz gerade tragenden mobile Vorrichtung, so wird der Datensatz mit der sich bewegenden mobilen Vorrichtung mittransportiert und nach einer vorgegebenen Zeitspanne kontinuierlich ausgesandt bis der Informationsdatensatz abgesetzt werden kann. Auf diese Art und Weise wird der Informationsdatensatz zur ortsfesten Station in der Art eines Staffellaufes übertragen, wobei der "Staffelläufer" jedoch nicht weiss, wann und an wen er seine Staffel übergeben kann.

Es kann nun vorzugsweise jede mobile Vorrichtung kartographische Daten ihrer jeweiligen augenblicklichen Umgebung innerhalb eines vorgegebenen Umgebungsradius' zur Verfügung und eine Ortsbestimmungseinheit zur Bestimmung ihres augenblicklichen Orts haben. Eine Ortsbestimmung kann nun über ein so genanntes GPS ("Global Positioning System") erfolgen. Jede mobile Vorrichtung enthält in diesem Fall abgespeicherte kartographische Daten. Diese kartographischen Daten sind kommerziell beispielsweise auf einer CD-ROM erhältlich und werden über ein Interface in der mobilen Vorrichtung abgespeichert. Neben den kartographischen Daten wenigstens einer ortsfesten Station (in der Regel ist eine Vielzahl von ortsfesten Stationen abgespeichert) sind typischerweise unter den kartographischen Daten Strassen, interessante Orte betreffend Verpflegung, Unterhaltung, Einkaufsmöglichkeiten, Notfalleinrichtungen usw. abgespeichert.

Da nun jede mobile Vorrichtung ihren geographischen Ort und denjenigen der ortfesten Station bzw. der in ihrem Umkreis liegenden Stationen und zudem die kartographischen Daten der jeweiligen Umgebung kennt, kann die mobile Auslösevorrichtung einen Informationsdatensatz derart auf die "Reise schicken", dass er zu einer, d.h. zur nächst gelegenen Station übermittelbar ist. Hierzu werden nun gezielt mobile Vorrichtungen (=Übertragungsvorrichtungen) verwendet, welche sich zwischen der mobilen Auslösevorrichtung und der betreffenden ortsfesten Station befinden. Da sich alle mobilen Vorrichtungen bewegen, kann die Übertragung des Informationsdatensatzes von einer mobilen Vorrichtung zur anderen bzw. zur ortsfesten Station immer nur dann vorgenommen, wenn sie im jeweiligen Empfangsbereich sich befindet.

Die Informationsdatensätze können nun kontinuierlich ausgesendet werden und dann, sofern eine mobile Vorrichtung in den Sendebereich eindringt, von dieser aufgenommen und weiter gegeben werden. Bevorzugt wird man aber jede mobile Vorrichtung einen kurzen "Funkfeuerdatensatz" ausstrahlen lassen. Dieser "Funkfeuerdatensatz" wird dann irgendwann in Abhängigkeit der Verkehrsdichte von der den Informationsdatensatz tragenden mobilen Vorrichtung empfangen. Vorzugsweise wird dieser Funkfeuerdatensatz" die augenblicklichen Ortskoordinaten und die Bewegungsrichtung enthalten. Die den Informationsdaten tragende mobile Vorrichtung kann nun aus dem Inhalt des "Funkfeuerdatensatz" und den abgespeicherten Ortskoordinaten der ortsfesten Stationen ermitteln, ob die sich gerade "meldende" mobile Übertragungsvorrichtung zwischen ihr und der ortsfesten Station sich befindet. Tut sie das, wird der Informationsdatensatz übermittelt.

Vorzugsweise enthält der "Funkfeuerdatensatz" ein Identitätskennzeichen der sich meldenden mobilen Vorrichtung. Die Kenntnis dieses Kennzeichnens gestattet dann ein Rückverfolgen des ausgesendeten Informationsdatensatzes. Mit dem Informationsdatensatz wird man vorzugsweise auch ein Kennzeichen und die Ortskoordinaten der Auslöseeinheit versenden.

Ist die ortsfeste Station ausserhalb einer Sendeentfernung der mobilen Auslösevorrichtung, so ist ein direkter Funkkontakt unmöglich; er muss über wenigstens eine dazwischen sich befindende mobile Übertragungsvorrichtung, welche als Relaisstation dient, erfolgen. Zur Optimierung dieser bereichsweisen Funkübertragung ist es von Vorteil, wenn die augenblickliche Position der jeweiligen mobilen Übertragungsvorrichtung zur mobilen Auslösevorrichtung und auch zur ortsfesten Station bekannt ist. Da nun jede mobile Vorrichtung in Zusammenhang mit ihren abgespeicherten kartographischen Daten die augenblickliche Position gut und einfach bestimmen kann, sendet jede mobile Vorrichtung in vorgegebenen zeitlichen Abständen einen "Funkfeuerdatensatz" mit den augenblicklichen Ortskoordinaten, der Fahrtrichtung, eventuell einer Fahrbahnkennzeichnung und ihrer Kennzeichnung aus. Handelt es sich um Strassenfahrzeuge wird die Kennzeichnung das Fahrzeugkennzeichen, die Landeskennzeichnung, den Fahrzeugtyp und die Fahrzeugfarbe enthalten. Fahrzeugtyp und Fahrzeugfarbe sind beispielsweise für eine Erkennung durch Sanitätsfahrzeuge und Rettungshubschrauber von grossem Nutzen. Das repetitive Aussenden des Funkfeuerdatensatzes mit einer Frequenz von lediglich 2 Hz dürfte ausreichend sein. Der Funkfeuerdatensatz sollte derart oft ausgesendet werden, dass innerhalb einer üblichen Sendereichweite des Ad-hoc-Netzes wenigstens zweimal Funkfeuerdatensätze empfangen werden können. Fahren die Fahrzeuge beispielsweise mit einer Geschwindigkeit von 50 km/h, so würde ein Funkfeuerdatensatz etwa alle 3,5 m und bei einer Geschwindigkeit von 200 km/h alle knapp 28 m ausgesandt, was einem Sendebereich von etwa 100 m ausreichend sein dürfte. Da sämtliche mobilen Vorrichtungen ihren eigenen Zeitgeber zum Aussenden haben, ist davon auszugehen, dass die Funkfeuerdatensätze auf einem Teilstück einer Autobahn bzw. einem Teilstück eines Verkehrsweges zu unterschiedlichen Zeitpunkten ausgesandt werden und damit problemlos empfangen werden können, da zudem die Sendedauer im Mikrosekundenbereich und darunter liegt.

Um nun einerseits den Übermittlungsverkehr nicht ausufern zu lassen und um auch eine Sicherheit in der Übermittlung des informationsdatensatzes zu erreichen, wird die ortsfeste Station einen Antwortdatensatz kreieren und versenden. Da die Auslöseeinheit ihr Kennzeichnen und auch ihre Ortskoordinate mit dem Informationsdatensatz übermittelt hat, erreicht sie problemlos mit dem oben geschilderten Verfahren in "Rückwärtsrichtung" der Antwortdatensatz.

Diesen Antwortdatensatz erhalten auch an der Übermittlung des Informationsdatensatzes beteiligte mobile Übertragungsvorrichtungen, welche auch hiermit kein weiteres Aussenden dieses informationsdatensatzes mehr vornehmen. Sofern der Antwortdatensatz die mobile Auslösevorrichtung nicht direkt erreicht, wird eine möglichst weit von der ortsfesten Station oder einer den Antwortdatensatz tragenden mobilen Übertragungsvorrichtung entfernt in Richtung auf die mobile Auslösevorrichtung sich befindenden mobilen Übertragungsvorrichtung verwendet, wobei die mobile Übertragungsvorrichtung selbstverständlich sich noch im jeweiligen Empfangsbereich befinden muss.

Um eine möglichst schnelle Übertragung des informationsdatensatzes von der mobilen Auslösevorrichtung zur ortsfesten Station zu erreichen, werden vorzugsweise weit entfernte mobile Übertragungsvorrichtung verwendet, welche sich jedoch gerade noch in einer sicheren Empfangsdistanz befinden. Nur diese mobilen Übertragungsvorrichtungen erhalten den Informationsdatensatz zur Weitergabe. Eine Ermittlung der gerade noch sicheren Empfangsdistanz kann nun durch eine Auswertung der Funkfeuerdatensätze erfolgen, wobei hier im einfachsten Fall bei mehreren sich in dieselbe Fahrtrichtung bewegenden mobilen Übertragungsvorrichtungen nur jeweils auf die empfangene Sendefeldstärke abgestellt werden muss. Um den "Funkverkehr" einzuschränken, wird man vorzugsweise den Informationsdatensatz, sofern möglich, immer an die mobile Übertragungsvorrichtung weitergeben, deren Funkfeuerdatensatz mit etwa beispielsweise 25% der maximalen Empfangsleistung empfangen wird. Diese Auswahl ergibt möglichst weite Übermittlungsstrecken und gestattet zudem auch noch eine nachfolgende Übermittlung eines Antwortdatensatzes ohne dass diese mobile Vorrichtung bereits aus dem Sendebereich verschwunden ist.

Hat eine der ortsfesten Stationen einen Informationsdatensatz erhalten, so sendet sie, wie oben angeführt, einen Antwortdatensatz aus. Die ortsfeste Station sendet zudem auch einen Stationsdatensatz an eine mit ihr verbundene Zentrale und kann einen weiteren Stationsdatensatz auch an eine mit ihr verbundene weitere ortsfeste Station senden. Bei den ortsfesten Stationen, sofern diese beispielsweise im Strassenverkehr eingesetzt werden, handelt es sich um Notrufsäulen und Hotspots am Strassenrand. In diesem Fall übermittelt die den Informationsdatensatz empfangende Station den weiteren Stationsdatensatz an eine weitere Station, welche auf der entgegen gesetzten Richtung zur Fahrtrichtung der mobilen Auslösevorrichtung liegt. Dieser weiteren Station nähern sich nun Fahrzeuge, welche in Richtung der mobilen Auslösevorrichtung fahren. Diese Fahrzeuge können nun von der weiteren Station je nach Inhalt des Informationsdatensatzes informiert bzw. gewarnt werden oder auch einen Antwortdatensatz mitnehmen.

Die eine bzw. beide oder mehrer ortsfeste Stationen, wenn sie beispielsweise als Verkehrsinformationseinrichtungen ausgebaut sind, können nun einen Antwortsatz in eine vorgegebene Richtung aussenden. Dies ist beispielsweise auf Autobahnen von Vorteil, wenn auch Fahrzeuge auf der Gegenfahrbahn gewarnt werden sollen. Das Antwortsignal, da es in der Regel von grosser Wichtigkeit ist, kann nun mit gegenüber der Sendeleistung der mobilen Vorrichtungen bedeutend gesteigerter Sendeleistung ausgestrahlt werden, damit es auch von weiter entfernten mobilen Vorrichtungen empfangbar ist.

Der Informationsdatensatz kann nun einen unterschiedlichen Aufbau aufweisen. Er kann derart aufgebaut sein, dass er nur zur ortsfesten Station weitergegeben werden soll. Ein derartiger Informationsdatensatz betrifft z. B. ein am Strassenrand liegendes defektes Fahrzeug, welches den Pannendienst benachrichtigen will. Diese Information ist für andere mobilen Vorrichtungen unwichtig. In diesem Fall dienen weitere mobile Vorrichtungen lediglich als "Relaisstationen". Es gibt jedoch auch Informationen, welche für alle nachkommenden und eventuell auch entgegenkommenden Fahrzeuge von Wichtigkeit sind, wie ein Stau, eine Ölspur, eine Nebelbank, ... In diesem Fall wird zwar der Informationsdatensatz an wenigstens eine ortsfeste Station weitergereicht, alle anderen in der Umgebung befindlichen mobilen Vorrichtungen werten jedoch auch diese Information aus und bringen sie akustisch und/oder optisch in der mobilen Vorrichtung (Fahrzeug) zur Anzeige, um den Fahrzeugführer zu warnen. Dieser Informationsdatensatz wird dann bevorzugt zeitlich repetitiv in der Regel mit einer zeitlichen Limitierung ausgesendet. Um die Anzahl ausgesendeter Informationsdatensätze in Grenzen zu halten, erhält nun jede weitere mobile Vorrichtung eine Totschalt-Zeitverzögerung. Es kann zudem eine Begrenzung von weiter zu leitenden Datensätzen dadurch erreicht werden, in dem von jeder mobilen Übertragungsvorrichtung, sofern eine weitere mobile Vorrichtung sich in ihren Sendebereich befindet, jeder Datensatz nur einmal ausgesandt wird.

Ob Unfall oder Panne, im Strassenverkehr ist in der Regel immer schnelle Hilfe gefragt. Ausgehend von einer mobilen Auslösevorrichtung am Unfallort ist, so fern notwendig, über mobile Übertragungsvorrichtungen schnell ein Informationsaustausch mit einer ortsfesten Station von Vorteil, von der aus dann Hilfe angefordert werden kann. Der genaue Ort, an dem der Unfall bzw. die Panne sich ereignete, ist zum einen durch die Ortskoordinaten der ortsfesten Station gegeben und zum anderen auch durch die jeweiligen Koordinaten der mobilen Auslösevorrichtung, welche mit einer Ortsbestimmungseinheit z.B. einem GPS zusammenarbeitet.

Die Ermittlung von Ortskoordinaten ist insofern wichtig, da bei Unfällen etwa 30% aller Beteiligten nicht genau angeben können, wo sich was ereignet hat.

Die bereits bestehenden über zehntausend Notrufsäulen an Bundesautobahnen geben bereits ein gutes Netz von ortsfesten Stationen, welche zudem noch durch eine Vielzahl ebenfalls bereits bestehender und verwendbarer Hotspots ergänzt werden.

Weitere Ausführungsvariationen zur Erfindung und deren Vorteile ergeben sich aus dem nachfolgenden Text.

### Kurze Beschreibung der Zeichnungen

Nachfolgend werden Beispiele der erfindungsgemässen Vorrichtung und des erfindungsgemässen Verfahrens anhand von Zeichnungen näher erläutert. Es zeigen:
- Fig. 1: eine schematische Darstellung eines Autobahnabschnittes mit einer mobilen Auslösevorrichtung, mehreren mobilen Übertragungsvorrichtungen und mehreren ortsfesten Stationen zur Erläuterung des erfindungsgemässen Verfahrens und
- Fig. 2: ein Blockschaltbild einer elektronischen Einheit einer mobilen Auslöse- bzw. Übertragungsvorrichtung.

### Wege zur Ausführung der Erfindung

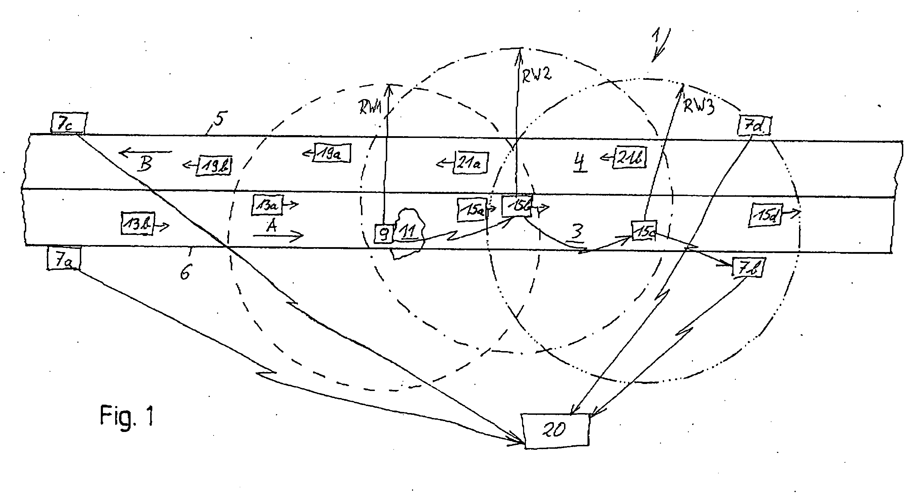

In **Figur 1** ist als Ausführungsbeispiel der Erfindung ein Teilbereich **1** einer Autobahn schematisch dargestellt. Auf dem Teilbereich **1** bewegen sich mehrere Fahrzeuge auf der einen Fahrbahn **3** in eine Fahrtrichtung **A** und auf der Gegenfahrbahn **4** in eine Fahrtrichtung **B.** Die Geschwindigkeit der einzelnen Fahrzeuge ist in der Regel unterschiedlich. An den beiden Fahrbahnrändern **5** und **6** befinden sich im Abstand von einigen Kilometern so genannte Notrufsäulen **7** als ortsfeste Stationen. Eines der Fahrzeuge, nämlich das Fahrzeug **9** auf der Fahrbahn **3** ist in Ereignis **11** verwickelt, welches einerseits für nachfolgende Fahrzeuge **13a** und **13b** sowie für die gesamte Verkehrlage von Interesse ist. Das Fahrzeug **9** wird somit zur Unterscheidung von anderen Fahrzeugen als "Auslösefahrzeug" **9** bezeichnet, da es durch vorgebbare Ereignisse **11** "auslösbar" ist. Ein Ereignis kann, wie bereits eingangs ausgeführt, eine Fahrzeugpanne, ein Unfall, ein Stau, Wetterprobleme (Eis oder Wasser auf der Fahrbahn, eine Nebelwand), ein schlechter Strassenzustand (Löcher, Bodenwellen) usw. sein. Dieses Ereignis **11** ist nun an wenigstens eine der Notrufsäulen **7a** bis **7d** sowie an die nachfolgenden Fahrzeuge **13a** und **13b** ein entsprechender Informationsdatensatz zu übermitteln. Als erstes wird nachfolgend eine Übermittlung eines Informationsdatensatzes an eine der Notrufsäulen **7a** bis **7d** beschrieben.

Da die Datenübermittlung möglichst schnell vonstatten gehen soll, ist der zu übermittelnde Informationsdatensatz standardisiert. Er enthält
➢ eine Fahrzeugidentifizierung (z.B. Fahrzeugnummer und Landeskennzeichnen, Fahrzeugfarbe und Typ),
➢ augenblickliche Fahrzeug-Ortskoordinaten
➢ Fahrtrichtung des Fahrzeugs bzw. Stillstandsangabe
➢ codierte Ereignisbeschreibung
➢ fakultativ kann auch noch eine Angabe der Uhrzeit vorgesehen werden

Bei der Übermittlung eines Informationsdatensatzes zwischen einer mobilen Auslösevorrichtung **9** und wenigstens einer ortsfesten Station, hier der ortsfesten Station **7b,** welche am rechten Fahrtrand **6** in Fahrtrichtung **A** vor der mobilen Auslösevorrichtung **9** angeordnet ist, wird ein Ad-hoc-Funknetz verwendet. Die Wirkungsweise von Ad-hoc-Netzen ist eingangs umrissen worden. Die Übermittlung von Informationsdatensätzen zwischen einer mobilen Auslösevorrichtung **9** ist derart aufgebaut, dass eine Entfernung der mobilen Auslösevorrichtung **9** zur in der Regel in Fahrtrichtung **A** nächstliegenden ortsfesten Station **7b** grösser sein kann, als deren Sende- und Empfangsreichweite **RW.** Damit dennoch eine über die Sende- und Empfangsreichweite **RW** hinausgehende Übermittlung erfolgen kann, werden als mobile Übertragungsvorrichtungen wirkende Fahrzeuge **15a** bis **15c** zwischen der mobilen Auslösevorrichtung **9** und der betreffenden ortsfesten Station **7b** verwendet. Die mobile Übertragungsvorrichtung **15a** bis **15c** haben bis auf eine Toleranz in Bezug auf die mobile Auslösevorrichtung **9** gleiche Sende- / Empfangsreichweite **RW.** Je nach Verkehrsaufkommen und Abstand der ortsfesten Station von der mobilen Auslösevorrichtung **9** wird nun der durch eine Ereignis ausgelöste Informationsdatensatz direkt oder über die wenigstens eine mobile Übertragungsvorrichtung oder über weitere mobile Übertragungsvorrichtungen an die ortsfeste Station **7b** übertragen.

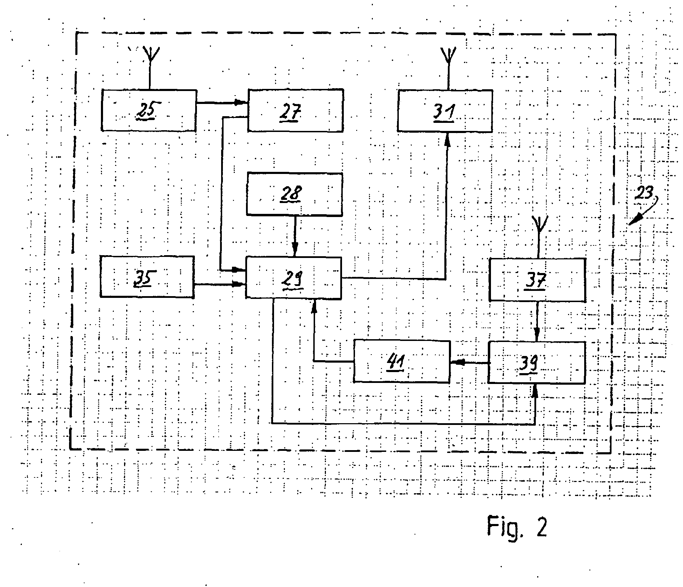

Obwohl die mobile Auslösevorrichtung **9** und die mobilen Übertragungsvorrichtungen **15a** bis **15c** unterschiedliche Funktionen erfüllen, sind ihre Sende- und Empfangseinrichtungen dieselben bzw. mit annähernd gleicher Sende- und Empfangsleistung analog ausgebildet. Es kann somit die mobile Auslösevorrichtung **9** in einer anderen Verkehrssituation als mobile Übertragungsvorrichtung **13a, 13b, 15a, 15b, 15c, 19a, 19b** und jede der mobilen Übertragungsvorrichtungen auch für sich als mobile Auslösevorrichtung wirken. Ein mit einer mobilen Auslösevorrichtung **9** zusammenwirkendes Ereignis **11** ist durch die Lage der den Informationsdatensatz empfangenden ortsfesten Station (Notrufsäule) in einem groben Bereich definiert. Diese grobe Ortsdefinition reicht aber in der Regel in den meisten Fällen, z. B. bei Unfällen, Ortung von Pannenfahrzeugen usw. nicht aus. Jede mobile Vorrichtung (mobile Auslöse- wie auch Übertragungsvorrichtung), hat deshalb, wie in **Figur 2** schematisch angedeutet, kartographische Daten in einem Speicher abgespeichert. Diese kartographischen Daten sind kommerziell auf CDs erhältlich. Diese kartographischen Daten werden mit den über GPS von einer Ortsbestimmungseinheit funktechnisch empfangenen augenblicklichen Ortskoordinaten kombiniert, wodurch der augenblickliche Ort bis auf einige Meter genau ermittelbar ist. Da jede mobile Vorrichtung abgespeicherte kartographische Daten enthält, kennt sie auch die jeweilige in Fahrtrichtung nächstliegende ortsfeste Station **7b.**

Die mobile Auslösevorrichtung **9** hat laufend die Funkfeuerdatensätze der anderen mobilen Vorrichtungen in ihrer Umgebung in Fahrtrichtung und entsprechend optimaler Entfernung zur ortsfesten Station ausgewertet und laufend mit neuen Daten überschreibend abgespeichert. Wirkt nun ein Ereignis **11** auf eine der mobilen Vorrichtungen, welche nun zur mobilen Auslösevorrichtung **9** wird, ein, so wird durch Sensoren in der mobilen Vorrichtung festgestellt, um welche Art der Einwirkung es sich handelt. Die Einwirkungsart wird an die Datenverarbeitungseinheit übermittelt, welche zusammen mit einer Identifizierung der mobilen Vorrichtung und einer Kennung der vorgängig ermittelten mobilen Übertagungsvorrichtung einen Informationsdatensatz aussendet, der von der erkannten mobilen Übertragungsvorrichtung erkannt wird und unter Hinzufügen ihrer Identifizierung an die von analog entfernungsmässig optimalen Übertragungsvorrichtungen übermittelt wird. Die Übermittlung an eine ortsfeste Station hat Vorrang vor einer Übermittlung zu einer weiteren mobilen Übermittlungsvorrichtung. Ist der Informationsdatensatz bei einer ortsfesten Station eingetroffen, so sende diese einen Antwortdatensatz auf demselben Funkweg, wie der durch die Kennungen der einzelnen mobilen Vorrichtung gekennzeichnet ist, zurück.

Es kann nun bei geringem Verkehrsfluss vorkommen, dass im Sendebereich der mobilen Auslösevorrichtung oder auch einer mobilen Übertragungsvorrichtung keine empfangsbereite weitere mobile Übertragungsvorrichtung vorhanden ist. In dem Fall, dass die mobile Auslösevorrichtung ihren Informationsdatensatz nicht absetzen kann, erfolgt ein repetitives Aussenden dieses Datensatzes bis der Informationsdatensatz abgesetzt werden kann. Der Informationsdatensatz enthält dann immer die ursprünglichen Ortskoordinaten des Ortes an dem das Ereignis statt gefunden hatte. Steht die mobile Auslösevorrichtung aufgrund einer Panne oder eines Unfalls still, so wird der Informationsdatensatz solange ausgesandt bis eine mobile Übertragungsvorrichtung in den Sendebereich eindringt. Konnte der Informationsdatensatz abgesetzt werden und ein Antwortdatensatz ist nicht innerhalb einer vorgegebenen Zeitspanne eingetroffen, so wird der Informationsdatensatz erneut repetitiv ausgesandt, bis er erneut von einer anderen mobilen Übertragungsvorrichtung aufgenommen wird. In diesem Fall wird davon ausgegangen, dass der Informationsdatensatz vor Erreichen der ortsfesten Station entweder durch einen technischen Sendedefekt bei der mobilen Übertragungsvorrichtung oder einem technischen Defekt der mobilen Übertragungsvorrichtung selbst verloren gegangen ist.

Es kann nun auch vorkommen, dass die mobile Übertragungsvorrichtung zum Zeitpunkt des Empfangs des Informationsdatensatzes diesen nicht an die ortsfeste Station oder an eine andere mobile Übertragungsvorrichtung in ihrem Sendebereich absetzen kann. In diesem Fall nimmt diese mobile Übertragungsvorrichtung den Informationsdatensatz so lange mit, bis eine direkte Übertragung an die ortsfeste Station oder an eine zur ortsfesten Station näher liegende mobile Übertragungsvorrichtung möglich ist. Der Antwortdatensatz der ortsfesten Station erreicht dann durch diese "staffetenartige" Datensatzübergabe die mobile Auslösevorrichtung.

Die Übergabe des Informationsdatensatzes erfolgt immer mit mobilen Übertragungsvorrichtungen, welche sich mit ihrer Fahrtrichtung auf die ortsfeste Station hin bewegen; also in einer ersten Priorität mittels der mobilen Übertragungsvorrichtungen **15a** bis **15d** zur Notrufsäule **7b.** Um den Datenfluss und die Übertragungsraten einzuschränken, wird der Datensatz, wenn möglich immer nur an die entfernteste, sich jedoch noch in der Empfangsreichweite **RW** befindenden mobilen Übertragungsvorrichtung weitergegeben. Jede der unten beschriebenen elektronischen Einheiten **23** enthält somit einen Diskriminator, der die Empfangspegel der empfangenen Funkfeuerdatensätze ermittelt und hieraus den Funkfeuerdatensatz mit dem schwächsten Pegel ermittelt, wobei vorzugsweise der Empfangspegel nicht unter 25% des maximalen Pegels liegen sollte, damit die betreffende mobile Übertragungsvorrichtung sich dann beim Eintreffen des Antwortdatensatzes noch in einer Sendereichweite befinden sollte, welche für eine einwandfreie Datenübertragung ausreichend ist. Wie eingangs erläutert, hat sich ein Empfangspegel von lediglich 25% der Sendeleistung als vorteilhaft erwiesen; es kann aber auch mit anderen Grenzwerten gearbeitet werden. Da nun die mobile Übertragungsvorrichtung **15a** relativ nahe sich zur mobilen Auslösevorrichtung **9** befindet, erhält jene einen Empfangspegel grösser als 25% und wird somit nicht für die Übermittlung des Informationsdatensatzes verwendet. Die mobile Übertragungsvorrichtung **15b** befindet sich jedoch etwa bei 25% des Empfangspegels der Empfangsreichweite **RW1** der mobilen Auslösevorrichtung **9** und wertet somit den von der mobilen Auslösevorrichtung ausgesandten Informationsdatensatz aus und versendet ihn mit einer bis auf eine Toleranz gleichen Sendereichweite **RW2.** Innerhalb der Sendereichweite **RW2** befindet sich die Übertragungsmobile **15c**. Die mobile Vorrichtung **15d** und auch die ortsfeste Station **7b** befinden sich ausserhalb der Sendereichweite **RW2.** Die mobile Übertragungsvorrichtung **15c** sendet den empfangene Informationsdatensatz aus, der nun von der ortsfesten Station **7b** empfangen werden kann, der dann an eine Zentrale **20** weitergeben wird. Die ortsfeste Station sendet einen Antwortdatensatz über die mobile Übertragungsvorrichtungen **15c** und **15b** an die mobile'Auslösevorrichtung **9.** Auf eine Quittierung des Antwortdatensatzes durch die mobile Auslösevorrichtung **9** kann verzichtet werden, da diese bei nicht eingegangenem Antwortdatensatz den Informationsdatensatz nach einer Zeitspanne von etwa zehn Sekunden ein weiteres Mal aussendet. Bei einer grossen Verkehrdichte erreicht der Antwortdatensatz die mobile Auslösevorrichtung **9** im Bruchteil einer Sekunde. Eine grössere Zeitverzögerung ergibt sich lediglich, wenn sich bei einer der mobilen Vorrichtungen keine weiteren mobilen Vorrichtungen im Sendebereich befindet und der Informationsdatensatz von der betreffenden mobilen Vorrichtung mitgenommen werden muss. Jede mobile Übertragungsvorrichtung sendet den empfangenen Informationsdatensatz mit derselben Zeitintervall von zehn Sekunden aus, sofern kein Antwortdatensatz erhalten worden ist.

Über die Auswahl eines vorgegebenen Empfangspegels ist eine zeitoptimierte Weiterleitung des Informationsdatensatzes gegeben. Die Weiterleitung des Informationsdatensatzes erfolgt, wenn möglich immer in der ursprünglichen Fahrtrichtung der mobilen Auslösevorrichtung. Führt diese Weiterleitung jedoch nicht in einer durchlaufenden Sequenz zu einer ortsfesten Station, so kann eine Übergabe des Informafionsdatensatzes an mobile Übertragungsvorrichtungen **19a** und **19b** erfolgen, welche sich in Gegenrichtung **B** bewegen. Auch diese mobilen Übertragungsvorrichtungen übergeben den Informationsdatensatz immer nur in Fahrtrichtung. D.h. die mobile Übertragungsvorrichtung **19a,** welche von der Auslöse-Mobilie **9** den Informationsdatensatz empfangen hat, gibt ihn an die mobile Übertragungsvorrichtung **19b** weiter und diese dann an die ortsfeste Station **7c.** Die ortsfeste Station **7c** gibt dann einen Antwortdatensatz an die ortsfesten Stationen **7a** und **7d** weiter, von denen dann über entsprechende mobile Übertragungsvorrichtungen die mobile Auslösevorrichtung **9** einen Antwortdatensatz erhält. Diese Art der Übertragung des Informations- und des Antwortdatensatzes ist immer dann von Vorteil, wenn beispielsweise eine Fahrspur gesperrt ist. Auch die ortsfesten Stationen **7a**, **7c** und **7d** geben den Informationsdatensatz an die Zentrale **20** weiter.

Um die Datenflut durch ein wiederholtes Aussenden des Informations- und des Antwortdatensatzes nicht überborden zu lassen, kann in einer unten beschriebenen elektronischen Einheit **23** der mobilen Vorrichtungen **9, 13a/b, 15a-d, 19a/b** und **21a/b** eine Sperreinheit **39** vorgesehen werden, welche gleiche Datensätze von einer Weiterverarbeitung fernhält.

Jede mobile Vorrichtung, sei es nun die mobile Auslösevorrichtung **9,** eine dieser mobilen Auslösevorrichtung **9** auf der gleichen Fahrbahn **3** nachfolgende bzw. voreilende mobile Übertragungsvorrichtung **13a/b** bzw. **15a-d** sowie entsprechende, auf der Gegenfahrbahn **4,** sich in Vorwärts- bzw. in Rückwärtsrichtung zur mobilen Auslösevorrichtung **9** befindende mobilen Vorrichtung **19a** und **19b** bzw. **21a** und **21a**, hat dieselbe funktionsmässige, in **Figur 2** schematische umrissene elektronische Einheit **23.** Die Einheit **23** hat eine GPS-Einheit **25** und eine Speichereinheit **27,** in der kartographische Daten abgespeichert sind. Ferner ist eine Datenverarbeitungseinheit **29** vorhanden, welche mit der GPS- und der Speichereinheit **25** und **27** sowie mit einer Identifizierungseinheit **28** signalmässig verbunden ist und mit den Daten beider Einheiten **25** und **27** die Funkfeuerdaten kreiert, welche dann mit einer mit der Datenverarbeitungseinheit **29** verbundenen Sendeeinheit **31** im Zeittakt gesteuert von einem mit der Sendeeinheit **31** verbundenen Zeitgeber **33** ausgesendet werden. Mit der Datenverarbeitungseinheit **29** sind ferner diverse Sensoren verbunden, wobei in **Figur 2** der Einfachheit halber lediglich ein einziger Sensor **35** eingezeichnet ist. Aus den Sensordaten, den Identifizierungsdaten der ldentifizierungseinheit **28** und den mittels der GPS-Einheit **25** und abgespeicherten kartografischen Daten kreierten Position der mobilen Auslösevorrichtung **9** wird von der Datenverarbeitürigseinheit **29** der Informationsdatensatz gebildet und ebenfalls über die Sendeeinheit **31** vom Zeitgeber **33** gesteuert ausgesandt. Da die mobile Auslösevorrichtung **9** auch als mobile Übertragungsvorrichtung verwendbar ist und zudem auch den Antwortdatensatz empfangen muss, ist eine Empfangseinheit **37** vorhanden, welche mit der Datenverarbeitungseinheit **29** signalmässig verbunden ist. Die Signalführung zur Datenverarbeitungseinheit **29** kann durch eine Sperreinheit **39** unterbunden werden, wie oben beschrieben ist. Der Sperreinheit **33** vor- oder auch nachgeordnet ist eine Diskriminationseinheit **41** vorhanden. Die Diskriminationseinheit **41** überprüft Empfangspegel der Funkfeuersignale von mobilen Übertragungsvorrichtungen auf deren Höhe sowie in einer bevorzugten Weise auch unter einer Berücksichtigung deren jeweiligen Bewegungsrichtungen. Wie bereits oben ausgeführt, wird nun derjenige Funkfeuerdatensatz ausgewählt, der mit dem niedrigsten Empfangspegel empfangen wird, wobei Empfangspegel unterhalb eines vorgegebenen Wertes nicht mehr ausgewertet werden. Als vorgegebener Wert hat sich 25% von einem maximal möglichen Empfangspegel bewährt. Infolge der Relativbewegungen zwischen den mobilen Übertragungsvorrichtungen, der ortsfesten Station und der mobilen Auslösevorrichtung, welche bei einer staffelartigen Übertragung über mehrere mobile Übertragungsvorrichtungen zur ortsfesten Station vonstatten geht, soll möglichst auch der Antwortdatensatz aus Zeitgründen über denselben Übertragungsweg möglich sein. Ein Empfangspegel von lediglich 25% garantiert einen relativ grossen Zwischenraum zwischen den einzelnen "Relaispunkten" bei einer noch ausreichenden Übertragungssicherheit.

Die elektronische Einheit hat eine eigene hier nicht dargestellte Energieversorgung. Die eigene Energieversorgung ist von Vorteil falls bei einem Unfall die Energieversorgung der anderen Verbraucher um beispielsweise einen Fahrzeugbrand zu verhindern, abgetrennt wird.

Der Funkfeuerdatensatz muss nicht bei allen mobilen Vorrichtungen mit ein und derselben Repetitionsrate ausgesandt werden. Da alle mobilen Vorrichtungen mit ein und demselben Standard im Ad-hoc-Netz arbeiten, haben sie auch alle etwa denselben Sendebereich **RW.** Eine sendende mobile Vorrichtung verlässt nun in Abhängigkeit ihrer Fortbewegungsgeschwindigkeit (Fahrtgeschwindigkeit) den Empfangsbereich einer sich mit einer anderen Geschwindigkeit bewegenden empfangenden mobilen Vorrichtung in unterschiedlichen Zeitbereichen. Um eine ausreichende Zeitspanne für eine Übermittlung eines Datensatzes und eine Antwortdatensatzes zu diesem Datensatz zur Verfügung zu haben, kann die Repetitionsrate des Aussendens des Funkfeuerdatensatzes an die Bewegungsgeschwindigkeit gekoppelt werden. Je schneller sich eine mobile Vorrichtung bewegt desto höher ist dann die Repetitionsrate.

Gemäss oben stehenden Ausführungen werden Informationsdatensätze ausgesandt, welche in der Regel nur die mobile Auslösevorrichtung **9** betreffen. Es gibt jedoch auch Ereignisse, welche für die nachfolgenden bzw. entgegenkommenden mobilen Vorrichtungen von Interesse sind bzw. diese vor Unfallgefahren warnen sollten. Ist ein derartiges Ereignis eingetreten, so erfolgt eine Weiterleitung des Informationsdatensatzes zu einer ortsfesten Station, wie oben beschrieben; zusätzlich wird dann jedoch ein Gefahrendatensatz kreiert, der analog zum lnformationsdatensatz die Position des Ereignisses und dessen Kennzeichnung sowie eine Gefahrenkennzeichnung enthält. Ein Gefahrendatensatz wird nun von allen im Sendebereich befindlichen mobilen Vorrichtungen (mobile Übertragungsvorrichtungen) empfangen, ausgewertet, angezeigt und weitergeleitet, wobei vorzugsweise die jeweilige Empfangseinheit, welche bereits einen Gefahrendatensatz empfangen hat, für weitere Gefahrendatensätze über einen vorgegebenen Zeitraum, der etwa eine dreissigfachen Gefahrendatensatzrepetitionszeit entspricht, gesperrt werden kann. Hierdurch soll verhindert werden, dass gleiche Gefahrendatensätze mehrmals empfangen werden. Die Weiterleitung der Gefahrendatensätze erfolgt, analog zur Funkfeuerrepetitionsfrequenz, welche an die Bewegungsgeschwindigkeit angepasst sein kann, etwa in einem zeitlichen Abstand von 500 us, wobei diese Zeitverschiebung von 500 µs nicht vom Eingang des Gefahrendatensatzes ausgehend vorgenommen wird, sondern ausgehen vom internen Zeitgeber 33 der betreffenden elektronischen Einheit 23 der betreffenden mobilen Vorrichtung. Hierdurch ist gegeben, dass die weitergeleiteten Gefahrendatensätze nicht alle zur gleichen Zeit eintreffen und damit eine Signalsperrung unmöglich wäre.

## Patentansprüche

1. Verfahren zur Übermittlung wenigstens eines Informationsdatensatzes zwischen einer mobilen Auslösevorrichtung (9) und wenigstens einer ortsfesten Station (7a-d), wobei die Übermittlung über ein Ad-hoc-Netz vorgenommen wird und eine Entfernung der mobilen Auslösevorrichtung (9) zur ortsfesten Station (7a-d) grösser sein kann als deren Sende- und Empfangsreichweite, indem die Übermittlung dann mit wenigstens einer mobilen Übertragungsvorrichtung (13a/b; 15a-c; 19a/b) erfolgt, in dem der Informationsdatensatz über die wenigstens eine mobile Übertragungsvorrichtung (13a/b; 15a-c; 19a/b) oder über weitere mobile Übertragungsvorrichtungen an die Station (7a-d) übertragen wird, **dadurch gekennzeichnet, dass** die Übermittlung immer mit der wenigstens einen oder den mehreren Übermittlungsvorrichtungen erfolgt, welche sich mit ihrer Fahrtrichtung auf die ortsfeste Station hin bewegen, und der Informationsdatensatz wenn möglich immer nur an die entfernteste, sich jedoch noch in der Empfangsreichweite befindende mobile Übertragungsvorrichtung weitergegeben wird.

2. Verfahren nach Anspruch 1, **dadurch gekennzeichnet, dass** die Auslösevorrichtung und alle Übertragungsvorrichtungen bis auf eine Herstellungstoleranz mit gleicher Sende- und Empfangsreichweite senden.

3. Verfahren nach Anspruch 1 oder 2, **dadurch gekennzeichnet, dass** in jeder mobilen Vorrichtung (9; 13a/b; 15a-c; 19a/b) kartographische Daten (27) abgespeichert sind und mittels einer Ortsbestimmungseinheit (25, 27, 28) hieraus für eine jeweilige augenblickliche Umgebung innerhalb eines vorgegebenen Umgebungsradius' die kartographischen Daten (27) wenigstens einer der ortsfesten Station (7a-d), vorzugsweise mehrerer der ortsfesten Stationen, jeder mobilen Vorrichtung (9; 13a/b; 15a-c; 19a/b) zur Verfügung gestellt werden, und aufgrund eines Auslösesignals die mobile Auslösevorrichtung (9) den Informationsdatensatz mit ihrem augenblicklichen Ort, einer Auslösekennzeichnung und einer Kennzeichnung der mobilen Auslösevorrichtung erzeugt, die Ortsbestimmungseinheit (25, 27, 28) der mobilen Auslösevorrichtung (9) kartographische Daten der mobilen Übertragungsvorrichtung (13a/b; 15a-c; 19a/b) in der Umgebung ermittelt, und, sofern eine der mobilen Übertragungsvorrichtung (13a/b; 15a-c; 19a/b) sich zwischen der mobilen Auslösevorrichtung (9) und der ortsfesten Station (7a, 7b, 7c) befindet, dieser den Informationsdatensatz zur Weitervermittlung an die ortfeste Station (7a, 7b, 7c) übermittelt und dieser Datensatz von dieser bzw. diesen mobilen Übertragungsvorrichtungen (13a/b; 15a-c; 19a/b) über weitere mobiler Übertragungsvorrichtungen an die Station (7a, 7b, 7c), insbesondere an eine nächst kommende ortsfeste Station, übertragen wird.

4. Verfahren nach einem der Ansprüche 1 bis 3, **dadurch gekennzeichnet, dass** jede mobile Vorrichtung (9, 13a/b; 15a-c; 19a/b; 21a/b) und vorzugsweise jede Station (7a-d), repetitiv einen Funkfeuerdatensatz aussendet, der wenigstens die kartographischen Daten des augenblicklichen Orts, die Bewegungsrichtung (A, B) der mobilen Vorrichtung (9, 13a/b; 15a-c; 19a/b; 21a/b) und vorzugsweise ein identitätskennzeichen enthält.

5. Verfahren nach einem der Ansprüche 1 bis 4, **dadurch gekennzeichnet, dass** die ortsfeste Station (7a-d) nach Eingang des Informationsdatensatzes einen Anwortdatensatz, mit einer vorzugsweisen Kennzeichnung der mobilen Auslösevorrichtung (9), an die mobile Auslösevorrichtung (9), und sofern der Antwortdatensatz die mobile Auslösevorrichtung (9) nicht direkt erreicht, unter einem Einsatz einer sich zur mobilen Auslösevorrichtung (9) hin bewegenden Übertragungsvorrichtung (13a/b; 15a-c; 19a/b) übermittelt, welche sich jedoch noch möglichst entfernt von der Auslösevorrichtung (9) befindet.

6. Verfahren nach Anspruch 4, **dadurch gekennzeichnet, dass** die mobile Auslösevorrichtung (9) die Funkfeuerdatensätze der mobilen Übertragungsvorrichtungen (13a/b; 15a-c; 19a/b; 21a/b) auswertet und den Informationsdatensatz an eine mobile Übertragungsvorrichtung (15b) zur Übergabe an die ortsfeste Station (7b) übermittelt, welche sich zwischen ihr (9) und der ortsfesten Station (7b) befindet.

7. Verfahren nach Anspruch 4, **dadurch gekennzeichnet, dass** die mobile Auslösevorrichtung (9) die Funkfeuerdatensätze der mobilen Übertragungsvorrichtungen (13a/b; 15a-c; 19a/b; 21a/b) in Fahrtrichtung (A) auf die Station (7b) überprüft und eine am weitesten entfernten mobile Übertragungsvorrichtung (15b) den Informationsdatensatz übermittelt erhält, sofern von der ortsfesten Station (7b) kein Antwortdatensatz ausgesandt wurde.

8. Verfahren nach Anspruch 1, **dadurch gekennzeichnet, dass** nach Eingang des Informationsdatensatzes die ortsfeste Station (7b) einen Stationsdatensatz an eine Zentrale (41) und vorzugsweise eine entsprechenden Datensatz an eine weitere ortsfeste, Station (7a, 7c, 7d) übermittelt, wobei die weitere Station mit Blick auf die eine Station auf der entgegengesetzten Richtung zur Bewegungsrichtung der mobilen Auslösevorrichtung (9) liegt.

9. Verfahren nach Anspruch 5 und 8, **dadurch gekennzeichnet, dass** die eine oder beide Stationen den Antwortdatensatz mit einem Richtungscode betreffend der mobilen Auslösevorrichtung (9) aussenden und der Antwortdatensatz nur von wenigstens einer am weitesten entfernten mobilen Übertragungsvorrichtung weitergegeben wird, welche vorzugsweise eine Bewegungsrichtung auf die mobile Auslösevorrichtung hin hat.

10. Verfahren nach einem der Ansprüche 1 bis 9, **dadurch gekennzeichnet, dass** die mobile Auslösevorrichtung (9), vorzugsweise zeitlich repetitiv, jedoch insbesondere zeitlich limitiert, einen Gefahren-Datensatz an alle sie umgebenden mobilen Vorrichtungen (13a 19a, 15a, 15b, 2 1 a) aussendet, welche diesen Gefahrendatensatz selbst verarbeiten und als Relaisstelle weitergeben, wobei vorzugsweise nur die mobilen Übertragungsvorrichtungen (13a, 15b, 19a, 21 a) den Gefahren-Datensatz, insbesondere mit einer Totschalt-Zeitverzögerung, weitergeben, welche sich im Grenzbereich der maximalen Sendereichweite befinden und insbesondere sämtlich den Gefahrendatensatz nicht relaisartig weitersendenden mobilen Übertragungsvorrichtungen ihre Empfangsbereitschaft während der Totschalt-Zeitverzögerung ausschalten.

11. Verfahren nach einem der Ansprüche 1 bis 10, **dadurch gekennzeichnet, dass** mobile Übertragungsvorrichtungen einen neu empfangenen Datensatz nur weiterleiten, wenn er sich von einem vorgängigen empfangenen unterscheidet.

12. Anordnung zur Übermittlung wenigstens eines Informationsdatensatzes gemäss dem Verfahren nach einem der Ansprüche 1 bis 11, umfassend wenigstens eine ortsfeste Station (7a-d) und eine mobile Auslösevorrichtung (9), wobei wenigstens eine zwischen der Auslösevorrichtung und der Station sich befindende mobile Übertragungsvorrichtung (13a/b; 15a-c; 19a/b) vorhanden ist und die Übermittlung dann mit der wenigstens einen mobilen Übertragungsvorrichtung (13a/b; 15a-c; 19a/b) unter Verwendung eines Ad-hoc-Netzes vornehmbar ist, **dadurch gekennzeichnet, dass** die mobile Übertragungsvorrichtung und die mobile Auslösevorrichtung je eine Diskriminationseinheit aufweisen, welche einen Empfangspegel der Funkfeuersignale von mobilen Übertragungsvorrichtungen auf deren Höhe sowie unter Berücksichtigung deren jeweiligen Bewegungsrichtungen überprüft.

13. Anordnung nach Anspruch 12, mit einer elektronischen Einheit (23) mit einer Sendeeinheit (31) zum Aussenden des Informationsdatensatzes, einer GPS-Einheit (25), einer Speichereinheit (27) für kartographische Daten, einer Datenverarbeitungseinheit (29) zur Ermittlung von Ortskoordinaten der mobilen Auslösevorrichtung (9) aus den ermittelten Daten der GPS-einheit (25) im Zusammenhang mit den abgespeicherten kartographischen Daten und zur Integration dieser Daten als einen ersten Datenteil in den Informationsdatensatz, wenigstens einen Sensor (35) für eine Ereignisaufnahme, wobei ein Ereignis von der Ereignisaufnahme mit der Datenverarbeitungseinheit (29) in einen zweiten Datenteil des Informationsdatensatzes verarbeitbar ist, **dadurch gekennzeichnet, dass** die elektronische Einheit (23) eine die Auslösevorrichtung (9) kennzeichnende Identifizierungseinheit (28), in der wenigstens optische Erkennungsdaten der mobilen Auslösevorrichtung (9) abgespeichert sind, damit diese als dritter Datenteil im Informationsdatensatz einbringbar sind, und vorzugsweise eine Empfangseinheit (37) zum Empfang eines weiteren Informationsdatensatzes einer anderen mobilen Auslösevorrichtung hat, wobei dieser zweite weitere Informationsdatensatz über die Sendeeinheit (31) wieder aussendbar ist.

14. Anordnung (9, 13a/b, 15a-d, 19a/b, 21a,b) nach Anspruch 13, **gekennzeichnet durch** eine Zeitgebereinheit (33), von der ein Aussenden des Informationsdatensatzes mit einer vorgegebenen Repetitionsfrequenz initiierbar ist, und vorzugsweise, sofern kein Informationsdatensatz vorhanden ist, ein Aussenden eines Funkfeuerdatensatzes initiierbar ist, der wenigstens die augenblicklichen Ortskoordinaten und insbesondere eine Bewegungsrichtung der Vorrichtung enthält

15. Anordnung nach Anspruch 14, **dadurch gekennzeichnet, dass** die Diskriminationseinheit (41) die Datenverarbeitungseinheit (29) veranlasst einen Informationsdatensatz an die Vorrichtung mit dem niedrigsten Empfangspegel auszusenden.

16. Anordung nach Anspruch 12, **gekennzeichnet durch** eine Sperreinheit (39), welche einen empfangen Datensatz zur Verarbeitung in der Datenverarbeitung sperrt, sofern er innerhalb einer vorgegebenen Zeitspanne eintrifft und sich nicht von einem bereits empfangenen Datensatz unterscheidet.

## Claims

1. Method for transmitting at least one information data record between a mobile trigger apparatus (9) and at least one fixed station (7a-d), the transmission being effected via an ad hoc network and a distance between the mobile trigger apparatus (9) and the fixed station (7a-d) being able to be greater than the latter's transmission and reception range by virtue of the transmission then being effected using at least one mobile transmission apparatus (13a/b; 15a-c; 19a/b), by virtue of the information data record being transmitted to the station (7a-d) via the at least one mobile transmission apparatus (13a/b; 15a-c; 19a/b) or via further mobile transmission apparatuses, **characterized in that** the transmission is always effected using the at least one or more transmission apparatuses which move in their direction of travel toward the fixed station, and the information data record is always forwarded, if possible, to the most remote mobile transmission apparatus, that is still in the reception range, however.

2. Method according to claim 1, **characterized in that** the trigger apparatus and all the transmission apparatuses send with the same transmission and reception range up to a manufacturing tolerance.

3. Method according to claim 1 or 2, **characterized in that** each mobile apparatus (9; 13a/b; 15a-c; 19a/b) stores cartographic data (27), and from these, using a position finding unit (25, 27, 28), each mobile apparatus (9; 13a/b; 15a-c; 19a/b) is, for respective current surroundings within a prescribed surroundings radius, provided with the cartographic data (27) for at least one of the fixed stations (7a-d), preferably for a plurality of the fixed stations, and a trigger signal prompts the mobile trigger apparatus (9) to generate the information data record containing its current location, a trigger identifier and an identifier for the mobile trigger apparatus, the position finding unit (25, 27, 28) of the mobile trigger apparatus (9) to ascertain cartographic data for the mobile transmission apparatus (13a/b; 15a-c; 19a/b) in the surroundings, and then, if one of the mobile transmission apparatuses (13a/b; 15a-c; 19a/b) is situated between the mobile trigger apparatus (9) and the fixed station (7a, 7b, 7c), it transmits the information data record for forwarding to the fixed station (7a, 7b, 7c), and this data record is transmitted from this or these mobile transmission apparatuses (13a/b; 15a-c; 19a/b) to the station (7a, 7b, 7c), particularly to a nearest fixed station, via further mobile transmission apparatuses.

4. Method according to any of claims 1 to 3, **characterized in that** each mobile apparatus (9, 13a/b; 15a-c; 19a/b; 21a/b) and preferably each station (7a-d) repetitively transmits a beacon data record which contains at least the cartographic data for the current location, the direction of movement (A,B) of the mobile apparatus (9, 13a/b; 15a-c; 19a/b; 21a/b) and preferably an identifier.

5. Method according to any of claims 1 to 4, **characterized in that** the fixed station (7a-d), having received the information data record, transmits a response data record, containing a preferable identifier for the mobile trigger apparatus (9), to the mobile trigger apparatus (9) and, if the response data record does not reach the mobile trigger apparatus (9) directly, using a transmission apparatus (13a/b; 15a-c; 19a/b) which is moving toward the mobile trigger apparatus (9) but which is still as far away from the trigger apparatus (9) as possible.

6. Method according to claim 4, **characterized in that** the mobile trigger apparatus (9) evaluates the beacon data records from the mobile transmission apparatuses (13a/b; 15a-c; 19a/b; 21a/b) and transmits the information data record, for the purpose of transfer to the fixed station (7b), to a mobile transmission apparatus (15b) which is situated between it (9) and the fixed station (7b).

7. Method according to claim 4, **characterized in that** the mobile trigger apparatus (9) checks the beacon data records from the mobile transmission apparatuses (13a/b; 15a-c; 19a/b; 21a/b) in the direction of travel (A) to the station (7b), and a mobile transmission apparatus (15b) which is furthest away receives a transmission containing the information data record if the fixed station (7b) has not transmitted a response data record.

8. Method according to claim 1, **characterized in that** following receipt of the information data record the fixed station (7b) transmits a station data record to a control center (41) and preferably a corresponding data record to a further fixed station (7a, 7c, 7d), the further station being situated in the opposite direction from the direction of movement of the mobile trigger apparatus (9) with regard to the one station.

9. Method according to claims 5 and 8, **characterized in that** the one or both stations transmit the response data record with a direction code relating to the mobile trigger apparatus (9), and the response data record is forwarded only by at least one most distant mobile transmission apparatus, which is preferably moving in a direction toward the mobile trigger apparatus.

10. Method according to any of claims 1 to 9, **characterized in that** the mobile trigger apparatus (9) transmits, preferably at repeat times but in particular with a time limit, a hazard data record to all the mobile apparatuses (13a, 19a, 15a, 15b, 21a) surrounding it, which process this hazard data record themselves and forward it as a relay point, the hazard data record preferably being forwarded, particularly with a waiting time delay, only by the mobile transmission apparatuses (13a, 15b, 19a, 21a) which are situated in the limit region of the maximum transmission range and, in particular, all the mobile transmission apparatuses not relaying the hazard data record switch off their ready-to-receive state during the waiting time delay.

11. Method according to any of claims 1 to 10, **characterized in that** mobile transmission apparatuses forward a freshly received data record only if it differs from a previous received one.

12. Arrangement for transmitting at least one information data record according to the method according to any of claims 1 to 11, comprising at least one fixed station (7a-d) and a mobile trigger apparatus (9) there being present at least one mobile transmission apparatus (13a/b; 15a-c; 19a/b) situated between the trigger apparatus and the station, and the transmission then being able to be effected by means of the at least one mobile transmission apparatus (13a/b; 15a-c; 19a/b) using an ad hoc network, **characterized in that** the mobile transmission apparatus and the mobile trigger apparatus each have a discrimination unit (41) which checks a reception level for the beacon signals from mobile transmission apparatuses to determine the level thereof and taking account of the respective directions of movement thereof.

13. Arrangement according to claim 12, having an electronic unit (23), with a transmission unit (31) for transmitting the information data record, a GPS unit (25), a memory unit (27) for cartographic data, a data processing unit (29) for ascertaining location coordinates for the mobile trigger apparatus (9) from the ascertained data from the GPS unit (25) in connection with the stored cartographic data and for integrating these data as a first data portion into the information data record, at least one sensor (35) for event pickup, wherein an event from the event pickup can be processed by means of the data processing unit (29) to form a second data portion of the information data record, **characterized in that** the electronic unit (23) has an identification unit (28) which identifies the trigger apparatus (9) and which stores at least optical recognition data for the mobile trigger apparatus (9) so that these can be introduced as a third data portion in the information data record, and preferably a reception unit (37) for receiving a further information data record from another mobile trigger apparatus, this second further information data record being able to be transmitted again via the transmission unit (31).

14. Arrangement (9, 13a/b, 15a-d, 19a/b, 21a/b) according to claim 13, **characterized by** a timer unit (33) which can initiate transmission of the information data record at a prescribed repetition frequency and preferably, if there is no information data record present, can initiate transmission of a beacon data record which contains at least the current location coordinates and particularly a direction of movement for the apparatus.

15. Arrangement according to claim 14, **characterized in that** the discrimination unit (41) prompts the data processing unit (29) to transmit an information data record to the apparatus with the lowest reception level.

16. Arrangement according to claim 12, **characterized by** a blocking unit (39) which blocks a received data record for processing in the data processing section if it arrives within a prescribed time period and does not differ from a data record which has already been received.

## Revendications

1. Procédé de transmission d'au moins un jeu de données d'information entre un dispositif mobile de déclenchement (9) et au moins un poste fixe (7a-d), la transmission étant réalisée par l'intermédiaire d'un réseau ad hoc et la distance entre le dispositif mobile de déclenchement (9) et le poste fixe (7a-d) pouvant être supérieure à leur portée d'émission et de réception, la transmission ayant alors lieu à l'aide d'au moins un dispositif mobile de transmission (13a/b; 15a-c; 19a/b), le jeu de données d'information étant transmis au poste (7a-d) par le ou les dispositifs mobiles de transmission (13a/b; 15a-c; 19a/b) ou par d'autres dispositifs mobiles de transmission,
**caractérisé en ce que**
la transmission s'effectue toujours par le ou les dispositifs de transmission qui se déplacent dans une direction orientée vers le poste fixe et
**en ce que** le jeu de données d'information est transféré si possible toujours uniquement au dispositif mobile de transmission le plus éloigné mais encore situé à l'intérieur de la portée de réception.

2. Procédé selon la revendication 1, **caractérisé en ce que** le dispositif de déclenchement et tous les dispositifs de transmission envoient à une même portée d'émission et de réception en tenant compte d'une tolérance de fabrication.

3. Procédé selon les revendications 1 ou 2, **caractérisé en ce que** des données cartographiques (27) sont conservées en mémoire dans chaque dispositif mobile (9; 13a/b; 15a-c; 19a/b) et **en ce qu'**à partir de ces données et au moyen d'une unité (25, 27, 28) de détermination de position, pour un environnement instantané situé à l'intérieur d'un rayon d'environnement prédéterminé, les données cartographiques (27) d'au moins l'un des postes fixes (7a-d) et de préférence de plusieurs des postes fixes sont mises à disposition de chaque dispositif mobile (9; 13a/b; 15a-c; 19a/b), **en ce que** le dispositif mobile de déclenchement (9) forme le jeu de données d'information, une caractéristique de déclenchement et une caractérisation du dispositif mobile de déclenchement en son emplacement instantané sur base d'un signal de déclenchement, **en ce que** l'unité (25, 27, 28) de détermination de position du dispositif mobile de déclenchement (9) détermine des données cartographiques du dispositif mobile de transmission (13a/b; 15a-c; 19a/b) dans son environnement, **en ce que** si l'un des dispositifs mobiles de transmission (13a/b; 15a-c; 19a/b) est situé entre le dispositif mobile de déclenchement (9) et le poste fixe (7a, 7b, 7c), ce dispositif mobile de transmission détermine le jeu de données d'information pour le retransmettre au poste fixe (7a, 7b, 7c) et **en ce que** ce jeu de données est transmis par ce ou ces dispositifs mobiles de transmission (13a/b; 15a-c; 19a/b) au poste fixe (7a, 7b, 7c) et en particulier au poste fixe suivant par l'intermédiaire d'autres dispositifs mobiles de transmission.

4. Procédé selon l'une des revendications 1 à 3, **caractérisé en ce que** chaque dispositif mobile (9; 13a/b; 15a-c; 19a/b ; 21a/b) et de préférence chaque poste (7a-d) émet à répétition un jeu de données radio de déclenchement qui contient au moins les données cartographiques de l'emplacement instantané, la direction de déplacement (A, B) du dispositif mobile (9, 13a/b; 15a-c; 19a/b; 21a/b) et de préférence une caractérisation d'identification.

5. Procédé selon l'une des revendications 1 à 4, **caractérisé en ce qu'**après l'entrée du jeu de données d'information, le poste fixe (7a-d) transmet au dispositif mobile de déclenchement (9) un jeu de données de réponse qui présente de préférence une caractéristique du dispositif mobile de déclenchement (9) et **en ce que** si le jeu de données de réponse n'atteint pas directement le dispositif mobile de déclenchement (9), il le transmet en recourant à un dispositif de transmission (13a/b; 15a-c; 19a/b) qui se déplace par rapport au dispositif mobile de déclenchement (9) et qui se trouve aussi loin que possible du dispositif de déclenchement (9).

6. Procédé selon la revendication 4, **caractérisé en ce que** le dispositif mobile de déclenchement (9) évalue les jeux de données radio de déclenchement des dispositifs mobiles de transmission (13a/b; 15a-c; 19a/b; 21a/b) et transmet le jeu de données d'information à un dispositif mobile de transmission (15b) pour envoi au poste fixe (7b) qui est situé entre lui (9) et le poste fixe (7b).

7. Procédé selon la revendication 4, **caractérisé en ce que** le dispositif mobile de déclenchement (9) vérifie les jeux de données radio de déclenchement des dispositifs mobiles de transmission (13a/b; 15a-c; 19a/b; 21a/b) dans la direction d'avancement (A) vers le poste (7b) et **en ce que** si le poste fixe (7b) n'a pas envoyé un jeu de données de réponse, le jeu de données d'information est transmis au dispositif mobile de transmission (15b) le plus éloigné.

8. Procédé selon la revendication 1, **caractérisé en ce qu'**après entrée du jeu de données d'information, le poste fixe (7b) transmet un jeu de données de poste à une centrale (41) et de préférence un jeu de données correspondant à un autre poste fixe (7a, 7c, 7d), l'autre poste étant situé à portée d'observation du premier poste dans la direction opposée à la direction de déplacement du dispositif mobile de déclenchement (9).

9. Procédé selon les revendications 5 et 8, **caractérisé en ce que** le poste ou les deux postes émettent le jeu de données de réponse avec un code de direction concernant le dispositif mobile de déclenchement (9) et **en ce que** le jeu de données de réponse n'est transmis que par le ou les dispositifs mobiles de transmission les plus éloignés et dont la direction de déplacement est de préférence dirigée vers le dispositif mobile de déclenchement.

10. Procédé selon l'une des revendications 1 à 9, **caractérisé en ce que** le dispositif mobile de déclenchement (9) émet de préférence à répétition mais en particulier avec une limite dans le temps un jeu de données de danger à tous les dispositifs mobiles (13a, 19a, 15a, 15b, 21a) qui l'environnent, qui traitent eux-mêmes ce jeu de données de danger et les transmettent à des emplacements de relais, en particulier avec une temporisation de temps mort, et **en ce que** de préférence seuls les dispositifs mobiles de transmission (13a, 15b, 19a, 21a) qui sont situés à la frontière de la portée maximale d'émission et en particulier tous les dispositifs mobiles de transmission qui ne relaient pas le jeu de données de danger débranchent leur fonction de réception pendant la temporisation de temps mort.

11. Procédé selon l'une des revendications 1 à 10, **caractérisé en ce que** des dispositifs mobiles de transmission ne renvoient un jeu de données nouvellement reçu que si ce jeu de données est différent d'un jeu de données précédemment reçu.

12. Système de transmission d'au moins un jeu de données d'information par recours au procédé selon l'une des revendications 1 à 11, comprenant au moins un poste fixe (7a-d) et un dispositif mobile de déclenchement (9), au moins un dispositif mobile de transmission (13a/b; 15a-c; 19a/b) situé entre le dispositif de déclenchement et le poste étant prévu et la transmission pouvant alors être réalisée par le ou les dispositifs mobiles de transmission (13a/b); 15a-c; 19a/b) par recours à un réseau ad hoc,
**caractérisé en ce que**
le dispositif mobile de transmission et le dispositif mobile de déclenchement présentent chacun une unité de discrimination (41) qui vérifie le niveau de réception des signaux radio de déclenchement en tenant compte également de leur direction de déplacement.

13. Système selon la revendication 12, qui présente une unité électronique (23) dotée d'une unité d'émission (31) qui émet le jeu de données d'information, d'une unité GPS (25), d'une unité de mémoire (27) qui contient des données cartographiques, d'une unité (29) de traitement de données qui détermine des coordonnées de localisation du dispositif mobile de déclenchement (9) à partir des données déterminées par l'unité GPS (25) en association aux données cartographiques conservées en mémoire, et pour l'intégration de ces données sous la forme d'une première partie de données du jeu de données d'information, d'au moins un détecteur (35) d'enregistrement d'événements, un événement de l'enregistrement d'événements pouvant être traité par l'unité (29) de traitement de données dans une deuxième partie de données du jeu de données d'information,
**caractérisé en ce que**
l'unité électronique (23) présente une unité d'identification (28) qui caractérise le dispositif de déclenchement (9) et dans laquelle des données de détection au moins optiques du dispositif de déclenchement (9) sont conservées en mémoire de telle sorte que ces données puissent être apportées dans le jeu de données d'information sous la forme d'une troisième partie de données, et de préférence une unité de réception (37) qui reçoit un autre jeu de données d'information d'un autre dispositif mobile de déclenchement, ce deuxième autre jeu de données d'information pouvant être réémis par l'unité d'émission (31).

14. Système (9, 13a/b, 15a-d, 19a/b, 21a,b) selon la revendication 13, **caractérisé par** une unité (33) de comptage du temps qui permet de lancer l'émission du jeu de données d'information à une fréquence de répétition prédéterminée et de préférence, si aucun jeu de données d'information n'est présent, qui peut lancer l'émission d'un jeu de données radio de déclenchement qui contient au moins les données de localisation instantanée et en particulier la direction de déplacement du dispositif.

15. Système selon la revendication 14, **caractérisé en ce que** l'unité de discrimination (41) permet à l'unité (29) de traitement de données d'envoyer un jeu de données d'information au dispositif qui présente le niveau de réception le plus bas.

16. Système selon la revendication 12, **caractérisé par** une unité de blocage (39) qui bloque le traitement d'un jeu de données reçu si ce jeu de données entre pendant un laps de temps prédéterminé et n'est pas différent d'un jeu de données déjà reçu.
